# EUROPEAN PATENT SPECIFICATION

(11) **EP 4 257 810 B1**
(45) Date of publication and mention of the grant of the patent: **10.12.2025**
(21) Application number: 22167158.9
(22) Date of filing: 07.04.2022
(51) Int. Cl.: F02B 19/10, F02B 77/11, F02B 19/00

(54) **PRE-CHAMBER COMPONENT FOR AN INTERNAL COMBUSTION ENGINE**
VORKAMMERKOMPONENTE FÜR EINEN VERBRENNUNGSMOTOR
COMPOSANT DE PRÉCHAMBRE POUR UN MOTEUR À COMBUSTION INTERNE

(43) Date of publication of application: 11.10.2023
(60) Divisional application: 25210710.7
(73) Proprietor: Innio Jenbacher GmbH & Co OG, 6200 Jenbach (AT)
(72) Inventor: GROTZ, Matthias, 6020 Innsbruck (AT); BUSSIERES, Frederic, 6020 Innsbruck (AT); WALDNER, Guenther, 6215 Achenkirch (AT); FIMML, Wolfgang, 6212 Maurach in Tirol (AT); RIVELLINI, Sandro, 6020 Innsbruck (AT); REK, Pawel, 6020 Innsbruck (AT)
(74) Representative: Torggler & Hofmann Patentanwälte - Innsbruck

(56) References cited:
- DE-A1- 3 832 261
- FR-A- 1 344 892
- FR-A- 1 436 612
- FR-A1- 2 587 756
- FR-A1- 2 587 758
- JP-A- S61 252 826
- US-A- 4 644 926
- US-A- 4 672 933

## Description

The present invention relates to a pre-chamber component for an internal combustion engine, a cylinder head or an internal combustion engine having such a pre-chamber component and a method for manufacturing a pre-chamber component.

Starting from a certain size of internal combustion engines, in particular gas engines, it is beneficial to use ignition amplifiers, in order to properly ignite the air-fuel-mixture, preferably a diluted and/or lean air-fuel-mixture in the large volume of the cylinders.

Pre-chambers usually serve as these ignition intensifiers, wherein the fuel-air mixture that is highly compressed at the end of the compression stroke is ignited in a relatively small secondary space (a pre-chamber volume) separate from the main combustion chamber of the cylinders, wherein the combustion of the pre-chamber passes over, e.g. via transfer passages fluidically connecting the pre-chamber volume with the main combustion chamber, into the main combustion chamber and ignites the compressed air-fuel mixture in the main combustion chamber.

Embodiments of pre-chambers components known by the state of the art are disclosed by FR 1 344 892 A, FR 1 436 612 A, JP S61 252 826 A, FR 2 587 756 A1, DE 38 32 261 A1, US 4 672 933 A, FR 2 587 758 A1 or US 4 644 926 A.

Consequently, the pre-chamber and their pre-chamber components are affected by increased thermal loads, wherein the mostly small and filigree geometric shapes are affected by high temperatures.

Therefore, it is commonly known to provide the pre-chamber and their pre-chamber components with cooling systems to prevent the pre-chamber from defects and increased wear.

It is non-trivial to design a pre-chamber component having an effective cooling effect, nevertheless keeping sufficient temperature to guarantee good combustion conditions in the pre-chamber volume.

Next to other advantages the process of scavenging pre-chamber volumes represents a good possibility (as a side effect) to cool or temper (in the sense of temperature management) the pre-chamber component part, wherein the pre-chamber volume is flushed or filled with fuel gas during the gas exchange phase, in order to enrich the fuel-air mixture in the pre-chamber.

For this, a small amount of fuel gas may be diverted from the fuel supply line to the main combustion chamber and fed into the pre-chamber via a suitable feed device provided with a non-return valve. This amount of fuel gas flushes the pre-chamber during gas exchange and so is known as flushing or scavenging gas.

This process can be carried out using a fuel air mixture which is known as the mixture scavenged pre-chamber combustion system. Scavenging the pre-chamber with fuel air mixture leads to a higher lambda value in the pre-chamber At time of ignition this results in difficult conditions regarding ignitability and results in low pre-chamber temperatures in subsequence of lower combustion temperatures.

At the same time the end of the pre-chamber component facing the and/or protruding into the main combustion chamber is usually affected by high mechanical and thermal loads, potentially reducing the lifetime of the pre-chamber component.

Balancing the two described effects is a challenge and in concrete applications often results in either short lifetimes of the pre-chamber component or less than optimal ignition conditions in the pre-chamber.

The object of the invention is to provide a pre-chamber component for an internal combustion engine as well as a cylinder head and an internal combustion engine having such a pre-chamber component and a method for manufacturing a pre chamber component, wherein the ignition conditions in the pre-chamber are improved, preferably without weakening the pre-chamber and cylinder head components regarding its resistance to thermal and mechanical loads caused by the combustion in a main combustion chamber.

This object is achieved by a pre-chamber component for an internal combustion engine with the features of claim 1, a method for manufacturing a pre-chamber component for an internal combustion engine, as well a cylinder head and an internal combustion engine having such a pre-chamber assembly.

According to the invention it is provided that a pre-chamber body having a longitudinal direction along a centerline of the pre-chamber component, wherein the pre-chamber body forms a pre-chamber volume by at least partially enclosing the same, wherein the pre-chamber body comprises an inner contour forming a boundary surface of the pre-chamber volume and an outer contour of the pre-chamber body, wherein at least one sleeve at least partially surrounds the outer contour of the pre-chamber body circumferentially with respect to the centerline, at least one gas tight, gas filled cavity is provided which at least partially surrounds the pre-chamber volume circumferentially with respect to the centerline formed between the at least one sleeve and the outer contour of the pre-chamber body by corresponding geometry of the outer contour of the pre-chamber body and the at least one sleeve, wherein in that a circumferentially extending thermal expansion compensation portion is provided which is arranged on the at least one sleeve and comprises at least one meander shaped portion and which is capable to compensate for residual stress in the connection of the at least one sleeve and the pre-chamber body and thermal expansion variations of the pre-chamber body.

Pre-chambers and their pre-chamber bodies are cooled by heat transfer, wherein the pre-chamber or the pre-chamber body in a mounted state in the internal combustion engine may be in contact with a surrounding component (e.g. a cylinder head). Also, embodiments are known, wherein the pre-chamber or the pre-chamber component is directly flooded or surrounded by a cooling medium (mostly cooling water). The heat generated inside the pre-chamber volume is therefore passed by heat transfer over the pre-chamber body to the surrounding component and/or the cooling medium.

By providing a gas filled cavity being gas tight closed and at least partially surrounding the pre-chamber volume the cooling efficiency can be controlled, wherein in regions of the pre-chamber body - which are surrounded by a gas filled cavity - the thermal load released by the ignition and combustion inside the pre-chamber volume can be insulated from the cooling system of the pre-chamber and pre-chamber body, wherein a higher temperature of the pre-chamber body in these regions can be held. This is especially advantageous for mixture-scavenged pre-chamber ignition systems, but the advantage is not necessarily restricted to such ignition system.

By use of at least one gas filled cavity the heat transfer between the cooling system and the pre-chamber volume can be interrupted or reduced, wherein the heat transfer from the pre-chamber volume to the cooling system is hindered by the gas filled cavity and the reduced thermal conduction of the medium included in the gas filled cavity.

A gas filled cavity can be understood as a hollow space in the pre-chamber body filled with a gas. In other embodiments a gas filled cavity is realized by attaching a sleeve to the pre-chamber body in a gas tight manner.

Preferably the gas filled cavity contains the gas at a lower pressure than ambient pressure.

There is no particular lower limit for the pressure at which the gas is present in the cavity. Even in embodiments where the cavity is evacuated there will be residual gas, albeit at potentially low pressure. For the purposes of the invention also these embodiments can be understood to have a "gas filled cavity". If the pressure in the gas filled cavity is below ambient pressure in the following it is sometimes referred to as "vacuum". Persons skilled in the art understand of course that this does not mean an absolute vacuum, but simply gas at low pressure.

The centerline of the pre-chamber body can be understood as a central axis thereof along which the pre-chamber body extends longitudinally.

The pre-chamber body can comprise one single component part or can be made up of several component parts.

In preferred embodiments the pre-chamber component is component separate from a cylinder head of the internal combustion engine. However, embodiments where the pre-chamber component is integrated into the cylinder head of the internal combustion engine are in principle conceivable.

According to the invention the pre-chamber body can be thermally controlled, wherein in different regions of the pre-chamber body different temperatures can be provided. Therefore, e.g. a region of the pre-chamber volume can be provided with higher temperatures to increase the combustion and ignition properties inside the pre-chamber volume.

The at least one gas filled cavity therefore acts as insulation of the pre-chamber body, wherein the inner wall temperature of the pre-chamber body - forming the pre-chamber volume - and consequently the temperature of an air-fuel mixture inside the pre-chamber volume can be raised.

The raised temperature results in a reduced ignition delay and improves the combustion controllability, reduces cylinder-to-cylinder variation, and increases combustion stability as well as the efficiency of the internal combustion engine. Furthermore, it reduces the risk of misfiring at lowest load conditions.

Regions wherein the thermal load is much higher (e.g. an end of the pre-chamber body facing to or into the main combustion chamber in a mounted state of the pre-chamber component) can be cooled as in the prior art (by providing no gas filled cavities in this regions). In these regions the heat may be transferred through heat conduction through a solid body or solid bodies, e.g., to a cooling circuit filled with cooling liquid. Another example would be the cylinder head, which could transfer heat via the pre-chamber component to a cooling cavity and/or cooling system of the pre-chamber component.

Furthermore, it is provided that the gas filled cavity is gas tight closed, wherein no gas of the cavity can be exchanged with the environment. This characteristic significantly increases the insulating effect because every heat exchange of the gas of the cavity can be prevented, wherein no cooling affect occurs by a gas exchange in the cavity.

Already present internal combustion engines can be upgraded with at least one pre-chamber assembly according to the invention.

All measures and features described in connection with the prior art can also be taken in connection with the invention.

Advantageous embodiments are defined in the dependent claims.

In an embodiment where a gas filled cavity is realized by attaching a sleeve to the pre-chamber body in a gas tight manner by a welding process it can be provided that the gas is a gas of the protection atmosphere of a welding process. Experiments of the applicant have shown especially good results regarding the insulation effect of the at least one gas filled cavity, if a vacuum is enclosed in the at least one cavity, wherein the heat transfer across the at least one gas filled cavity has been minimized as much as possible.

The gas filled cavity can contain various gases or a mixture of more than one gas.

It can be provided that the at least one gas filled cavity is only arranged in a region of the pre-chamber body that extends from a second end of the pre-chamber component along the longitudinal direction towards a first end.

By providing the at least one gas filled cavity only in a region of the pre-chamber body that extends from a second end of the pre-chamber component along the longitudinal direction towards a first end the pre-chamber volume e.g., the pre-chamber volume can be covered by the insulating gas filled cavity to improve ignition and combustion properties, whereas a thermally highly affected region located in an area of the fist end of the pre-chamber body is not insulated and can be cooled in a common way (e.g. by a cooling medium, preferably cooling water).

It can be provided that the pre-chamber component comprises at least one transfer passage being arranged at a first end along the longitudinal direction of the pre-chamber component, which at least one transfer passage is suitable for fluidically connecting the pre-chamber volume with a main combustion chamber of the internal combustion engine in a mounted state of the pre-chamber component.

It can be provided that the at least one transfer passage in a mounted state of the pre-chamber component in the internal combustion engine fluidically connects the pre-chamber volume with the main combustion chamber of the internal combustion engine.

A riser passage can be provided, wherein the riser passage is arranged between the pre-chamber volume and the at least one transfer passage, wherein the pre-chamber volume and the at least one transfer passage, preferably a plurality of transfer passages, are fluidically connected.

It can be provided that the pre-chamber component comprises at least one supply channel being arranged at a second end along the longitudinal direction of the pre-chamber component, which at least one supply channel is suitable for fluidically connecting the pre-chamber volume with a fuel and/or air source of the internal combustion engine in a mounted state of the pre-chamber component.

Also, embodiments of pre-chamber components comprising no supply channel are quite possible. In use of such embodiments an air-fuel mixture is supplied to the pre-chamber volume via the main combustion chamber of the internal combustion engine. Therefore, an air-fuel mixture present or supplied to the main combustion chamber is forced into the pre-chamber volume (e.g., by passing at least one transfer passage, which fluidically connects the main combustion chamber with the pre-chamber volume in a mounted state of the pre-chamber component at the internal combustion engine) during the compression stroke, wherein the air-fuel mixture is mixed with the present gases in the pre-chamber volume and builds an ignitable air-fuel-mixture.

It can be provided that the at least one supply channel is connected with a fuel and/or air source (including a separate supply channel for fuel and air or a single supply channel for a fuel and air mixture being provided to the pre-chamber) of the internal combustion engine in a mounted state of the pre-chamber component.

It can be provided that in a fuel and/or air source of the internal combustion engine, preferably a fuel injector or a valve, is directly connected with the supply channel. Particular preferred it can be provided that the fuel and/or air source of the internal combustion engine is arranged immediately next to the supply channel, e.g. by an connection with the pre-chamber body. It can be provided that the fuel and/or air source of the internal combustion engine is screwed into the pre-chamber body.

It can be provided that an ignition source, preferably a spark plug, is arranged at the pre-chamber body, particular preferred facing into the pre-chamber volume e.g. via a separate opening of the pre-chamber body or via the supply channel.

It can be provided that the pre-chamber body comprises an inner component part forming the pre-chamber volume and a at least one sleeve, wherein the at least one sleeve at least partially surrounds the inner component part circumferentially with respect to the centerline, preferably wherein between the at least one sleeve and the inner component part the at least one cavity is formed by corresponding geometry of the inner component part and the at least one sleeve.

Therefore the at least one sleeve at least partly surrounds the pre-chamber body, the boundary surface of the pre-chamber volume as well as the pre-chamber volume itself.

It can be provided that the at least one gas filled cavity is formed between the at least one sleeve and the outer contour of the pre-chamber body by corresponding geometry of the outer contour of the pre-chamber body and the at least one sleeve.

Furthermore, it can be provided that the at least one sleeve only surrounds a region of the pre-chamber volume which extends from a second end of the pre-chamber component along the longitudinal direction towards a first end. Preferably a region of at least one transfer passage (suitable for connecting the pre-chamber volume with a main combustion chamber of the internal combustion engine) and/or riser passage is not surrounded by the at least one sleeve and/or by the at least one gas filled cavity.

Alternatively or additionally, it can be provided that the at least one sleeve only surrounds the pre-chamber body which encloses the pre-chamber volume (or even less).

Typically, the pre-chamber volume is separated from the transfer passage by a transition radius. The volume between the second end to the beginning of the convex transition radius of the pre-chamber body along the center line of the pre-chamber body can be seen as the pre-chamber volume.

It can be provided that the at least one sleeve only surrounds up to 75%, preferably up to 50% of the pre-chamber volume.

It can be provided that the outer contour of the pre-chamber body and/or the inner component part comprises at least one - preferably circumferentially extending - first recess, which recess contributes to the volume of the gas filled cavity.

It can be provided that the outer contour of the pre-chamber body and/or the inner component part comprises at least one - preferably circumferentially extending - second recess, wherein the at least one second recess is suitable for receiving the at least one sleeve and/or which recess contributes to the volume of the gas filled cavity.

A first recess and/or a second recess can be present in embodiments of the invention independently of each other.

The second recess can be arranged inside first recess.

Residual stresses can be induced by the attaching process of the sleeve onto the pre-chamber body on the one hand. On the other hand, additional mechanical stresses can be induced due to the assembly of the pre-chamber component with the cylinder head.

By use of an insulation of the pre-chamber component, especially by use of at least one gas filled cavity being gas tight, the present temperatures during application of the pre-chamber component in an internal combustion engine at different regions of the pre-chamber component significantly differ. Therefore, the prechamber component is affected by different thermals stresses and expansions in different regions, wherein large deformations of the pre-chamber component can occur, which deformations can affect the functionality of the pre-chamber component.

If the deformations of the pre-chamber component are limited by surrounding components high stresses occur in the pre-chamber component, which stresses can cause damage and/or cracks in the pre-chamber component.

Especially in the region in which the at least on gas filled cavity is arranged, the temperature differences on a side of the pre-chamber component facing the pre-chamber volume and a side of the pre-chamber component facing away from the pre-chamber volume seen in a cross section orthogonal to the centerline differ quite widely.

For compensation of such stresses and deformations caused by different thermal expansions in different regions of the pre-chamber components a circumferentially extending thermal expansion compensation portion, such as meander shaped portions, especially in a region in which the at least one gas filled cavity, is contemplated.

It can be provided, that the at least one sleeve is capable of compensating thermal expansion variations of the pre-chamber component effected by differing thermal loads being present at the pre-chamber component.

It can be provided that in case that the pre-chamber body comprises regions with different temperatures a sleeve covering these regions can compensate the differing thermal deformations by meander-shaper portions, which meander-shaped portions allow an increased elastic deformation of the sleeve without affecting the properties (e.g. the sealing of the gas filled cavity by the sleeve) of the sleeve.

It is also conceivable that the sleeve or the pre-chamber body are provided with a special selection of materials or the same material, comprising particularly preferred thermal (expansion) properties to reduce stresses between the sleeve and the pre-chamber body (and avoid as result e.g. leaking of the gas filled cavity).

It can be provided that the region in which the at least one gas filled cavity is arranged covers less than 90%, preferably less than 75%, more preferably less than 50%, and even more preferably less than 40%, of the total length of the pre-chamber body and/or the pre-chamber volume measured along the longitudinal direction from the second end to the first end.

It can be provided that the region in which the at least one cavity is arranged covers 35%, preferably 40%, particular preferred 50%, of the total length of the pre-chamber body and/or the pre-chamber volume measured along the longitudinal direction from the second end to the first end.

Surrounding the pre-chamber body only partially with the gas tight cavity has the effect, that the part of the pre-chamber body which is not insulated by the gas tight, gas filled cavity, e.g. in the area of the flamedeck, can be effectively cooled with the cooling medium.

As mentioned, the cooling medium can preferably be water.

It can be provided that the pre-chamber component comprises a plurality of component parts, preferably wherein the plurality of component parts is connected by a welding process, particularly preferred an electron beam welding process.

It is also conceivable to connect the sleeve removably with the inner component part e.g. by use of a press fit.

Protection is also sought for a cylinder head for an internal combustion engine and/or an internal combustion engine comprising at least one pre-chamber component according to the invention, preferably wherein the cylinder head comprises a bore to receive the pre-chamber component, the bore being configured such that cooling water can flow around the pre-chamber component between the cylinder head bore and the pre-chamber component, when the pre-chamber component is arranged in the cylinder head.

Furthermore, protection is sought for a method for manufacturing a pre-chamber component, comprising the step of forming a pre-chamber body of the pre-chamber component extending longitudinally along a centerline, wherein the pre-chamber body forms a pre-chamber volume by at least partially enclosing the same, wherein the method comprises further the step of forming at least one layer of the pre-chamber body at least partially surrounding the pre-chamber body circumferentially with respect to the centerline, wherein by the at least one layer surrounding at least partially the pre-chamber body at least one gas tight, gas filled cavity is created between the pre-chamber body and the at least one layer.

It can pe provided that the method further comprises the steps of providing the at least one layer as at least one sleeve, wherein the at least one sleeve is placed surrounding the pre-chamber body creating the at least one gas filled cavity between the at least one sleeve and the pre-chamber body.

It can be provided that the method further comprises the step of forming the at least one layer while the gas is present, preferably under lower pressure than ambient pressure, preferably by welding the at least one sleeve, particular preferred by electron beam welding, with the pre-chamber body under a protection atmosphere.

In the case the welding is realized in an atmosphere with lower pressure compared to normal pressure conditions it can be provided that the pressure in the gas filled cavity equals the pressure conditions during the welding process.

It can be provided that the method further comprises the step of enclosing a gas by the at least one gas filled cavity, preferably at lower pressure than ambient pressure.

It can be provided that the method further comprises the step of forming at least one layer of the pre-chamber body at least partially surrounding the pre-chamber body circumferentially with respect to the centerline under a vacuum and/or in a protection atmosphere, wherein the at least one gas filled cavity is gas tightly enclosing a vacuum (e.g. lower than 4*10^-4 mbar) and/or a gas of the protection atmosphere

The pressure in the gas tight cavity can preferably be lower than 10^-2 mbar, particularly preferably lower than 10^-3, and even more preferably lower than 4*10^-4 mbar.

It can be provided that the method further comprises the step of forming the pre-chamber body by at least in part - preferably completely - an additive manufacturing process, preferably under a vacuum and/or in a protection atmosphere, wherein the at least one gas filled cavity is gas tightly enclosing a vacuum and/or a gas of the protection atmosphere.

It can be provided, that the at least one layer surrounding at least partially the pre-chamber body is capable of compensating thermal expansion variations of the pre-chamber component, preferably by deformations of the at least one layer.

Furthermore, protection is sought for an internal combustion engine comprising at least one pre-chamber component according to the invention and/or comprising a pre-chamber component manufactured by a method according to the invention.

It can be provided that the internal combustion engine is operated with lean fuel air mixture (lambda value e.g. between 1,5 and 2,5 at full load).

It can be provided that the pre-chamber volume is directly scavenged (not via the main combustion chamber during the compression stroke) with pure fuel.

Preferably it can be provided that a fuel air mixture comprising a lambda value equal or different to the lambda value of the fuel air mixture provided to the main combustion chamber is supplied directly to the pre-chamber volume.

As a result of providing such a fuel air mixture directly to the pre-chamber, the lambda value in the pre-chamber volume at time of ignition is higher than in the case where the pre-chamber volume is scavenged with pure fuel. A (thermally) insulated pre-chamber component according to the invention is then especially advantageous, as the ignitability of a fuel air mixture decreases with increasing lambda value.

It can be provided that the internal combustion engine is operated with essentially stoichiometric fuel air mixture admixed with exhaust gas (EGR).

Independently, it can be provided that the pre-chamber volume is directly scavenged with a stoichiometric fuel air mixture together with exhaust gas. Also, for such pre-chamber combustion strategies an insulated pre-chamber according to the invention is advantageous, as the ignitability of the mixture in the pre-chamber volume decreases with increasing amount of admixed exhaust gas.

Further, it can be provided that the internal combustion engine combusts at least partly hydrogen as a fuel, wherein, wherein the pre-chamber volume could be directly scavenged with a hydrogen air mixture (lambda value e.g. between 1,5 and 3,5 at full load, or even higher).

Especially for lambda values higher than 2,5, e.g. to compensate for the increased flame speed of hydrogen compared to e.g. natural gas, an insulated pre-chamber component according to the invention is then advantageous, as the ignitability decreases with increasing lambda value.

Further details and advantages of the invention are apparent from the accompanying figures and the following description of the drawings.
- Fig. 1: a first embodiment of the invention,
- Fig. 2: a second embodiment of the invention,
- Fig. 3 a-c: alternative embodiments with respect to Fig. 2 and
- Fig. 4: a mounted state of a pre-chamber component in an internal combustion engine.

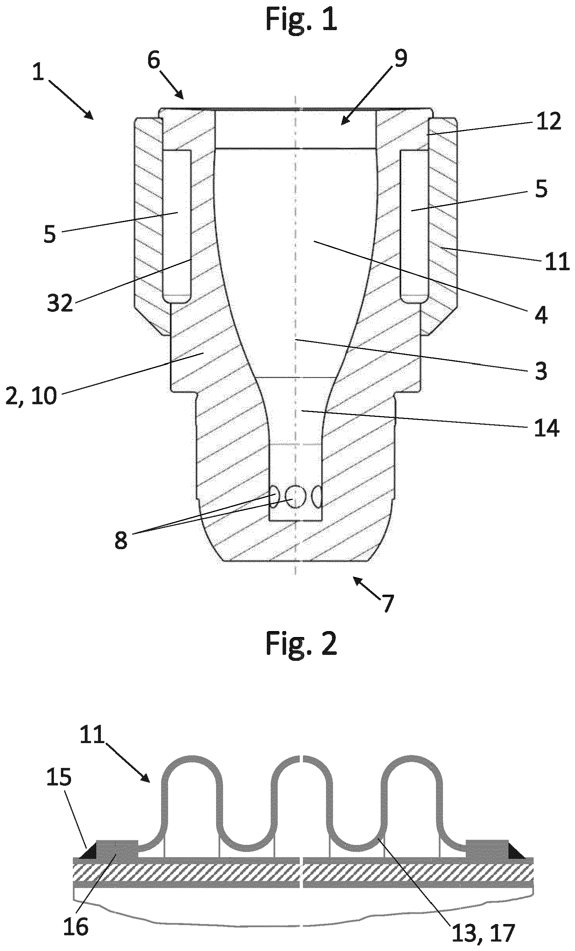

Fig. 1 shows a first embodiment of a pre-chamber component part 1 according to the invention, comprising a pre-chamber body 2 having a longitudinal extension along a centerline 3 of the pre-chamber component 1.

The pre-chamber body 2 forms a pre-chamber volume 4 by at least partially enclosing the same.

The pre-chamber component 1 comprises a plurality of transfer passages 8 being arranged at a first end 7 along the longitudinal direction of the pre-chamber component 1, which at least one transfer passage 8 is suitable for fluidically connecting the pre-chamber volume 4 with a main combustion chamber of the internal combustion engine in a mounted state of the pre-chamber component 1.

A riser passage 14 is provided, wherein the riser passage 14 is arranged between the pre-chamber volume 4 and the transfer passages 8, such that the pre-chamber volume 4 and the plurality of transfer passages 8 are fluidically connected.

Furthermore, the pre-chamber component 1 comprises a supply channel 9 being arranged at a second end 6 along the longitudinal direction of the pre-chamber component 1, which supply channel 9 is suitable for fluidically connecting the pre-chamber volume 4 with a fuel and/or air source of the internal combustion engine in a mounted state of the pre-chamber component 1.

The pre-chamber body 2 of this embodiment is designed as inner component part 10 forming the pre-chamber volume 4.

A sleeve 11 is provided, wherein the sleeve 11 surrounds the inner component part 10 or the pre-chamber body 2, wherein between the sleeve 11 and the inner component part 10 / pre-chamber body 2 a gas filled cavity 5 is formed by corresponding geometry of the inner component part 10 and the at least one sleeve 10.

The sleeve 11 is arranged at a second recess 12, which second recess 12 is formed at the pre-chamber body 2 or inner component part 10.

The gas filled cavity 5 comprises a vacuum, this vacuum in the gas filled cavity 5 is generated during a welding process, preferably an electron beam welding process, wherein the sleeve 11 is welded with the pre-chamber body 2.

Therefore, the gas filled cavity 5 is gas tight, by the welding process, and encloses a vacuum.

The gas filled cavity 5 is only arranged in a region of the pre-chamber body 2 that extends from a second end 6 of the pre-chamber component 1 along the longitudinal direction towards a first end 7. Strictly speaking, the gas filled cavity 5 is arranged in a region which covers about 50% of the total length of the pre-chamber body 2 measured along the longitudinal direction from the second end 6 to the first end 7.

The gas filled cavity 5 therefore acts as insulation of the pre-chamber body 2, wherein the inner wall temperature of the pre-chamber body 2 - forming the pre-chamber volume 4 - and consequently the temperature of an air-fuel mixture inside the pre-chamber volume 4 can be raised.

The raised temperature results in a reduced ignition delay and improves the combustion controllability, reduces cylinder-to-cylinder variation, and increases combustion stability as well as the efficiency of the total mechanical impact of the internal combustion engine. Furthermore, it reduces the risk of misfiring at lowest load conditions.

Regions wherein the thermal load is much higher (e.g. the first end 7 of the pre-chamber body 2 facing into the main combustion chamber of the internal combustion engine in a mounted state of the pre-chamber component 1) can be cooled much more efficiently.

To avoid thermal stresses and deformation in response to the different temperature regions of the pre-chamber body 2 it can be provided that the sleeve 11 comprises a circumferential extending thermal expansion compensation portion 13, at the embodiment of Fig. 2 presented by a meander-shaped portion 17, said meander-shaped portion 17 being capable of compensating for thermal expansion of the sleeve 11.

The circumferential extending thermal expansion compensation portion 13 is preferably arranged in a region of the gas filled cavity 5.

In case that the pre-chamber body 2 comprises regions with different temperatures a sleeve 11 covering these regions can compensate the differing thermal deformations by meander-shaper portions 13, which meander-shaped portions 13 allow an increased elastic deformation of the sleeve 11 without affecting the properties (e.g. the sealing of the gas filled cavity 4 by the sleeve 11) of the sleeve 11.

The connection sleeve 16 can be placed into a second recess 12 of a pre-chamber body 2, as shown by Fig. 1 or can be connected by a different known possibility (e.g. by a press fitting) to the pre-chamber body 2

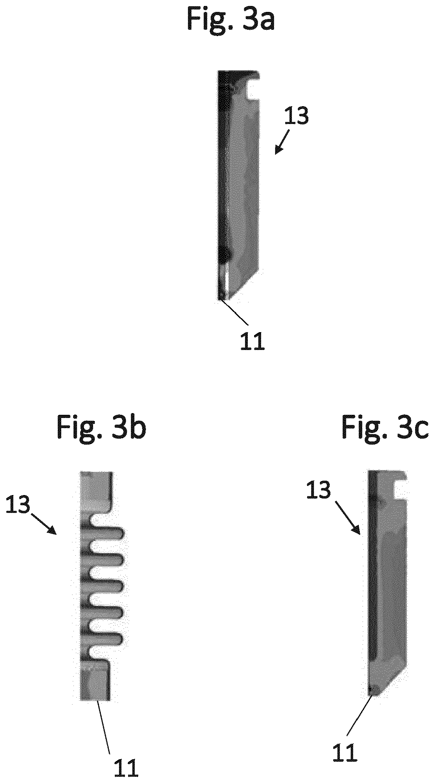

Fig. 3a to 3c represent various different embodiments of sleeves 11, which can be used e.g. for covering a second recess 12 of a pre-chamber body 2 or an inner component 10 as shown in Fig. 1.

Fig. 3a to 3c represent therefore schematically figures illustrating the acting stresses resulting from thermal load during the application of the pre-chamber component 1, wherein the stress levels are illustrated by the different shades of gray, wherein the nearly black regions are affected by the highest stresses.

These regions are affected with high temperature differences, wherein different thermal extensions occur. As said thermal extensions are hindered by the fixing of the sleeves 11, instead of the extensions stresses occur, which stresses can cause damages and/or cracks in the pre-chamber component 1.

This can for example be seen by the sleeve 11 illustrated by Fig. 3a, wherein the same sleeve as shown by Fig. 1 is illustrated in isolation, wherein the sleeve is fixed at the upper and the lower end by welding with the pre-chamber body 2.

As there is no possibility for thermal extensions the sleeve 11 is affected by high stresses, wherein cracks have to be expected during lifetime in the nearly black indicated regions of the sleeve 11.

This can be improved for example by an embodiment as shown in Fig. 3c, wherein the sleeve 11 (compared with the sleeve 11 of Fig. 3a) is only fixed by a welding in the lower end to the pre-chamber body 2.

The outer contour of the pre-chamber body 2 comprises a circumferentially extending first recess 32, which recess 32 contributes to the volume of the gas filled cavity 5.

Furter more, the outer contour of the pre-chamber body 2 comprises a circumferentially extending second recess 12, wherein the second recess 12 is suitable for receiving the sleeve 11.

The first recess 32 and/or a second recess 12 can be present in embodiments of the invention independently of each other.

Therefore, different longitudinal extensions affected by the thermal load of the pre-chamber component 1 between the sleeve 11 and the pre-chamber body 2 can be realized and stresses can be reduced.

Independent of the shape of the compensating portion, it has several advantageous. Especially in embodiments where the sleeve is welded to the pre-chamber body, the welding process itself induces residual stress in the weld seam and/or the sleeve. Such residual stress can lead to a failure of the weld seam or the sleeve.

In addition, due to varying thermal expansion of the pre-chamber body as a result of the partial insulation as described above (temperature gradient along the pre-chamber body), additional stress is induced in the weld seam and/or the sleeve.

The compensating portion, which is preferably meander shaped (but any other shapes with comparable compensating effects are conceivable), compensates for these residual and thermal stresses and prevents failure of the weld seam or the insulating sleeve.

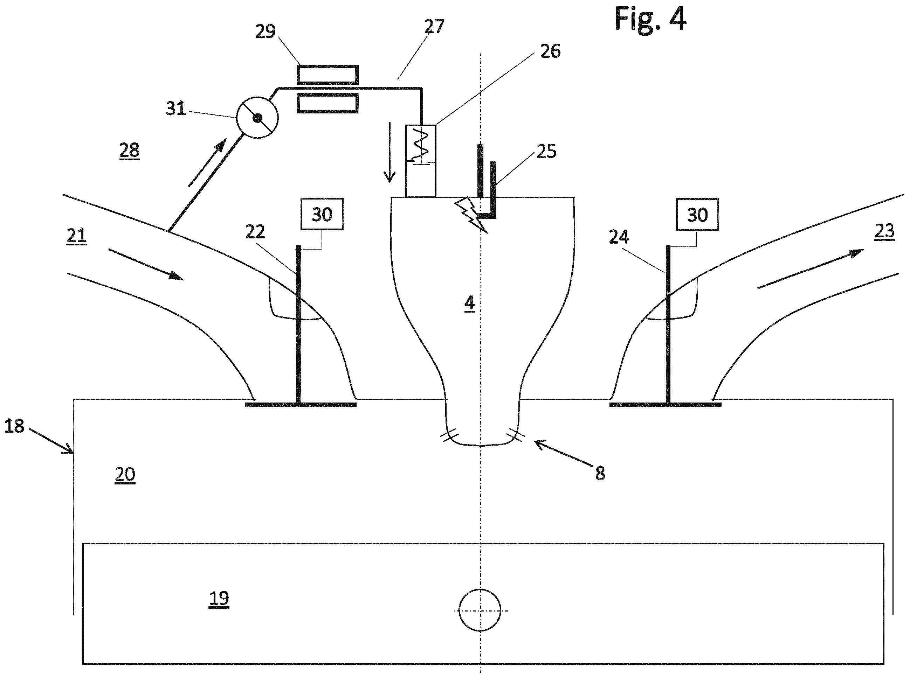

FIG. 4 shows a cylinder 18 in which a piston 19 is arranged so as to be movable up and down, whereby a main combustion chamber 20 is formed between the piston 19 and the cylinder 18.

At its top dead center, the piston 19 with the cylinder 18 and the pre-chamber volume 4 forms the so-called compression volume.

An intake duct 21 can be closed by an intake valve 22 and an outlet duct 23 can be closed by an outlet valve 24 opposite the main combustion chamber 20. The intake valve 22 and the outlet valve 24 are actuated by the actuators 20.

A pre-chamber volume 4 communicates with the main combustion chamber 20 via transfer passages 8 and has an ignition source 25 and a pre-chamber gas valve 26 in the form of a non-return valve, which is connected to a source for an air-fuel mixture.

In this exemplary embodiment, the intake duct 21 itself serves as this source, and a connecting line 27, which is formed as a cavity in the cylinder head 28, is provided for the pre-chamber gas valve 26.

To regulate the quantity of air-fuel mixture that can be fed into the pre-chamber volume 4, an adjustable throttle 31 is arranged in the connecting line 27 in this exemplary embodiment.

Furthermore, a temperature control device 29 is provided in the form of pre-heating by means of engine cooling liquid in order to keep the connecting line 27 at a temperature that prevents condensation of the air fuel mixture.

It would also be quite possible that the pre-chamber volume 4 comprises a separate fuel source, separated from the intake duct 21.

### List of used reference signs:

- 1: pre-chamber component
- 2: pre-chamber body
- 3: centerline
- 4: pre-chamber volume
- 5: gas filled cavity
- 6: second end
- 7: first end
- 8: transfer passage
- 9: supply channel
- 10: inner component part
- 11: sleeve
- 12: recess
- 13: thermal expansion compensation portion
- 14: riser passage
- 15: connection
- 16: connection sleeve
- 17: meander-shaped portion
- 18: cylinder
- 19: piston
- 20: main combustion chamber
- 21: intake duct
- 22: intake valve
- 23: outlet duct
- 24: outlet valve
- 25: ignition source
- 26: pre-chamber gas valve
- 27: connection line
- 28: cylinder head
- 29: temperature control device
- 30: actuator
- 31: adjustable throttle
- 32: first recess

## Claims

1. Pre-chamber component for an internal combustion engine, comprising a pre-chamber body (2) having a longitudinal direction along a centerline (3) of the pre-chamber component (1), wherein the pre-chamber body (2) forms a pre-chamber volume (4) by at least partially enclosing the same, wherein the pre-chamber body (2) comprises an inner contour forming a boundary surface of the pre-chamber volume (4) and an outer contour of the pre-chamber body, wherein at least one sleeve (11) at least partially surrounds the outer contour of the pre-chamber body (2) circumferentially with respect to the centerline (3), at least one gas tight, gas filled cavity (5) is provided which at least partially surrounds the pre-chamber volume (4) circumferentially with respect to the centerline (3) formed between the at least one sleeve (11) and the outer contour of the pre-chamber body (2) by corresponding geometry of the outer contour of the pre-chamber body and the at least one sleeve (11), **characterized in that** a circumferentially extending thermal expansion compensation portion (13) is provided, which is arranged on the at least one sleeve (11) and comprises at least one meander shaped portion (17) and which is capable to compensate for residual stress in the connection of the at least one sleeve and the pre-chamber body (2) and thermal expansion variations of the pre-chamber body (2).

2. Pre-chamber component according to claim 1, wherein the gas filled cavity (5) contains the gas at a lower pressure than ambient pressure.

3. Pre-chamber component according to claim 1 or 2, wherein the gas is air and/or a protection atmosphere of a welding process.

4. Pre-chamber component according to at least one of the preceding claims, wherein the at least one gas filled cavity (5) is only arranged in a region of the pre-chamber body (2) that extends from a second end (6) of the pre-chamber component (1) along the longitudinal direction towards a first end (7).

5. Pre-chamber component according to at least one of the preceding claims, wherein the pre-chamber component (1) comprises at least one transfer passage (8) being arranged at a first end (7) along the longitudinal direction of the pre-chamber component (1), which at least one transfer passage (8) is suitable for fluidically connecting the pre-chamber volume (4) with a main combustion chamber of the internal combustion engine in a mounted state of the pre-chamber component (1).

6. Pre-chamber component according to at least one of the preceding claims, wherein the pre-chamber component (1) comprises at least one supply channel (9) being arranged at a second end (6) along the longitudinal direction of the pre-chamber component (1), which at least one supply channel (9) is suitable for fluidically connecting the pre-chamber volume (4) with a fuel and/or air source of the internal combustion engine in a mounted state of the pre-chamber component (1).

7. Pre-chamber component according to at least one of the preceding claims, wherein the at least one sleeve (10) only surrounds a region of the pre-chamber body (2) which encloses the pre-chamber volume (4).

8. Pre-chamber component according to at least one of the preceding claims, wherein the outer contour of the pre-chamber body (2) (2) comprises at least one - preferably circumferentially extending - recess (12), wherein the at least one recess (12) is suitable for receiving the at least one sleeve (11) and/or which recess (12) contributes to the volume of the gas filled cavity (5).

9. Pre-chamber component according to at least one of the preceding claims, wherein the region in which the at least one gas filled cavity (5) is arranged covers less than 75%, more preferably less than 50%, of the total length of the pre-chamber body (2) and/or the pre-chamber volume (4) measured along the longitudinal direction from the second end (6) to the first end (7).

10. Pre-chamber component according to at least one of the claims 1 to 8 and optionally claim 9, wherein the region in which the at least one gas filled cavity (5) is arranged covers 35%, preferably 40%, particular preferred 50%, of the total length of the pre-chamber body (2) measured along the longitudinal direction from the second end (6) to the first end (7).

11. Pre-chamber component according to at least one of the preceding claims, wherein the pre-chamber component (1) comprises a plurality of component parts, preferably wherein the plurality of component parts is connected by a welding process, particularly preferred an electron beam welding process.

12. Method for manufacturing a pre-chamber component (1) according to at least one of the claims 1 to 11, comprising the step of forming a pre-chamber body (2) of the pre-chamber component (1) extending longitudinally along a centerline (3), wherein the pre-chamber body (2) forms a pre-chamber volume (4) by at least partially enclosing the same, **characterized in that** the method comprises further the step of forming at least one layer of the pre-chamber body (2) at least partially surrounding the pre-chamber body (2) circumferentially with respect to the centerline (3), wherein by the at least one layer surrounding at least partially the pre-chamber body (2) at least one gas tight, gas filled cavity (5) is created between the pre-chamber body (2) and the at least one layer.

13. Method according to claim 12, wherein the method further comprises the steps of providing the at least one layer as at least one sleeve (11), wherein the at least one sleeve (11) is placed surrounding the pre-chamber body (2) creating the at least one gas filled cavity (5) between the at least one sleeve (11) and the pre-chamber body (2).

14. Method according to claim 12 or 13, wherein the method further comprises the step of forming the at least one layer while the gas is present, preferably under lower pressure than ambient pressure, preferably by welding the at least one sleeve (11), particular preferred by electron beam welding, with the pre-chamber body (2) under a protection atmosphere.

15. Method according to at least one of the claims 12 to 14, wherein the method further comprises the step of forming the pre-chamber body (2) at least in part - preferably completely - by an additive manufacturing process,

16. Cylinder head for an internal combustion engine and/or internal combustion engine, preferably an at least partially hydrogen combusting internal combustion engine, comprising at least one pre-chamber component (1) according to at least one of claims 1 to 11 preferably wherein the cylinder head (28) comprises a bore to receive the pre-chamber component (1), the bore being configured such that cooling water can flow around the pre-chamber component (1) between the cylinder head bore and the pre-chamber component (1).

## Patentansprüche

1. Vorkammerbauteil für eine Brennkraftmaschine, mit einem Vorkammerkörper (2), der entlang einer Mittelachse (3) des Vorkammerbauteils (1) eine Längsrichtung aufweist, wobei der Vorkammerkörper (2) ein Vorkammervolumen (4) bildet, indem er dieses zumindest teilweise umschließt, wobei der Vorkammerkörper (2) eine Innenkontur aufweist, die eine Begrenzungsfläche des Vorkammervolumens (4) bildet, sowie eine Außenkontur, wobei wenigstens eine Hülse (11) die Außenkontur des Vorkammervolumens (2) zumindest abschnittsweise mit Bezug auf die Mittelachse (3) umgibt, mindestens eine gasdichte, gasgefüllte Kavität (5) vorgesehen ist, welche das Vorkammervolumen (4) zumindest abschnittsweise umfangsseitig in Bezug auf die Mittelachse (3) umgibt und durch eine entsprechende Geometrie der Außenkontur des Vorkammerkörpers (2) und der wenigstens einen Hülse (11) zwischen der wenigstens einen Hülse (11) und der Außenkontur der Vorkammer (4) gebildet ist,
**dadurch gekennzeichnet, dass** ein sich in Umfangsrichtung erstreckender Abschnitt (13) zur Kompensation der Wärmeausdehnung vorgesehen ist, welcher an der mindestens einen Hülse (11) angeordnet ist, mindestens einen mäanderförmigen Abschnitt aufweist und dazu ausgebildet ist, sich in Verbindung mit thermischen Ausdehnungsunterschieden zwischen der wenigstens einen Hülse (11) und dem Vorkammerkörper (2) ergebende Eigenspannungen auszugleichen.

2. Vorkammerbauteil nach Anspruch 1, wobei die gasgefüllte Kavität (5) ein Gas mit niedrigerem Druck als dem Umgebungsdruck enthält.

3. Vorkammerbauteil nach Anspruch 1 oder 2, wobei es sich bei dem Gas um Luft und/oder eine Schutzgasatmosphäre eines Schweißprozesses handelt.

4. Vorkammerbauteil nach wenigstens einem der vorhergehenden Ansprüche, wobei die wenigstens eine gasgefüllte Kavität (5) ausschließlich in einem Bereich des Vorkammerkörpers (2) angeordnet ist, der sich von einem zweiten Ende (6) des Vorkammerbauteils (1) entlang der Längsrichtung zu einem ersten Ende (7) erstreckt.

5. Vorkammerbauteil nach wenigstens einem der vorhergehenden Ansprüche, wobei das Vorkammerbauteil (1) wenigstens einen Überströmkanal (8) umfasst, der an einem ersten Ende (7) entlang der Längsrichtung des Vorkammerbauteils (1) angeordnet ist, wobei der mindestens eine Überströmkanal (8) dazu ausgebildet ist, in einem montierten Zustand des Vorkammerbauteils (1) das Vorkammervolumen (4) fluidtechnisch mit einem Hauptbrennraum der Brennkraftmaschine zu verbinden.

6. Vorkammerbauteil nach wenigstens einem der vorhergehenden Ansprüche, wobei das Vorkammerbauteil (1) mindestens einen Versorgungskanal (9) umfasst, der an einem zweiten Ende (6) entlang der Längsrichtung des Vorkammerbauteils (1) angeordnet ist, wobei der mindestens eine Zuführkanal (9) dazu ausgebildet ist, in einem montierten Zustand des Vorkammerbauteils das Vorkammervolumen (4) mit einer Kraftstoff- und/oder Luftversorgung der Brennkraftmaschine zu verbinden.

7. Vorkammerbauteil nach wenigstens einem der vorhergehenden Ansprüche, wobei die wenigstens eine Hülse (10) ausschließlich einen Bereich des Vorkammerkörpers (2) umgibt, der das Vorkammervolumen (4) umschließt.

8. Vorkammerbauteil nach wenigstens einem der vorhergehenden Ansprüche, wobei die Außenkontur des Vorkammerkörpers (2) wenigstens eine - vorzugsweise umlaufende - Ausnehmung (12) aufweist, wobei die wenigstens eine Ausnehmung (12) dazu ausgebildet ist, die wenigstens eine Hülse (11) aufzunehmen und/oder zum Volumen der gasgefüllten Kavität (5) beizutragen.

9. Vorkammerbauteil nach wenigstens einem der vorhergehenden Ansprüche, wobei der Bereich, in dem die wenigstens eine gasgefüllte Kavität (5) angeordnet ist, weniger als 75 %, vorzugsweise weniger als 50 %, der Gesamtlänge des Vorkammerkörpers (2) und/oder des Vorkammervolumens (4), gemessen entlang der Längsrichtung vom zweiten Ende (6) zum ersten Ende (7), umfasst.

10. Vorkammerbauteil nach wenigstens einem der Ansprüche 1 bis 8 und optional Anspruch 9, wobei der Bereich, in dem die wenigstens eine gasgefüllte Kavität (5) angeordnet ist 35 %, vorzugsweise 40 %, besonders bevorzugt 50 %, der Gesamtlänge des Vorkammerkörpers (2), gemessen entlang der Längsrichtung vom zweiten Ende (6) zum ersten Ende (7), abdeckt.

11. Vorkammerbauteil nach wenigstens einem der vorhergehenden Ansprüche, wobei das Vorkammerbauteil (1) eine Vielzahl von Bauteilen umfasst, vorzugsweise wobei die Vielzahl an Bauteilen durch ein Schweißverfahren, besonders bevorzugt ein Elektronenstrahlschweißverfahren, miteinander verbunden sind.

12. Verfahren zur Herstellung eines Vorkammerbauteils (1) gemäß einem der Ansprüche 1 bis 11, umfassend den Schritt des Formens eines Vorkammerkörpers (2) des Vorkammerbauteils (1), der sich längs entlang einer Mittelachse (3) erstreckt, wobei der Vorkammerköper (2) ein Vorkammervolumen (4) ausbildet, indem er dieses zumindest teilweise umschließt,
**dadurch gekennzeichnet, dass** das Verfahren ferner den Schritt des Formens wenigstens einer Schicht des Vorkammerkörpers (2) umfasst, die den Vorkammerkörper (2) zumindest abschnittsweise umfangsseitig in Bezug auf die Mittelachse (3) umgibt, wobei durch die zumindest abschnittsweise um den Vorkammerkörper (2) verlaufende wenigstens eine Schicht mindestens eine gasdichte, gasgefüllte Kavität (5) zwischen dem Vorkammerkörper (2) und der wenigstens einen Schicht geschaffen wird.

13. Verfahren nach Anspruch 12, wobei das Verfahren ferner die Schritte umfasst, die wenigstens eine Schicht als wenigstens eine Hülse (11) bereitzustellen, wobei die wenigstens eine Hülse (11) um den Vorkammerkörper (2) herum angeordnet wird, wodurch die wenigstens eine gasgefüllte Kavität (5) zwischen der wenigstens einen Hülse (11) und dem Vorkammerkörper (2) gebildet wird.

14. Verfahren nach Anspruch 12 oder 13, wobei das Verfahren ferner den Schritt umfasst, die wenigstens eine Schicht während Präsenz des Gases zu formen, vorzugsweise unter einem niedrigeren Druck als dem Umgebungsdruck, vorzugsweise durch Schweißen der wenigstens einen Hülse (11), besonders bevorzugt durch Elektronenstrahlschweißen, mit dem Vorkammerkörper unter einer Schutzatmosphäre.

15. Verfahren nach wenigstens einem der Ansprüche 12 bis 14, wobei das Verfahren ferner den Schritt des Formens des Vorkammerkörpers (2) zumindest teilweise - vorzugsweise vollständig - durch ein additives Fertigungsverfahren umfasst.

16. Zylinderkopf für eine Brennkraftmaschine und/oder Brennkraftmaschine, bevorzugt eine zumindest teilweise mit Wasserstoff betriebene Brennkraftmaschine, umfassend wenigstens ein Vorkammerbauteil (1) nach wenigstens einem der Ansprüche 1 bis 11, vorzugsweise wobei der Zylinderkopf (28) eine Bohrung zur Aufnahme des Vorkammerbauteils (1) aufweist, wobei die Bohrung so ausgebildet ist, dass Kühlwasser zwischen der Zylinderkopfbohrung und dem Vorkammerbauteil (1) um das Vorkammerbauteil (1) herumfließen kann.

## Revendications

1. Composant de préchambre pour un moteur à combustion interne, comportant un corps de préchambre (2) ayant une direction longitudinale le long d'une ligne centrale (3) du composant de préchambre (1), dans lequel le corps de préchambre (2) forme un volume de préchambre (4) en renfermant au moins partiellement celui-ci, dans lequel le corps de préchambre (2) comporte un contour intérieur formant une surface limite du volume de préchambre (4) et un contour extérieur du corps de préchambre, dans lequel au moins un manchon (11) entoure au moins partiellement le contour extérieur du corps de préchambre (2) circonférentiellement par rapport à la ligne centrale (3), au moins une cavité remplie de gaz et étanche au gaz (5) est prévue, laquelle entoure au moins partiellement le volume de préchambre (4) circonférentiellement par rapport à la ligne centrale (3) formée entre l'au moins un manchon (11) et le contour extérieur du corps de préchambre (2) par une géométrie correspondante du contour extérieur du corps de préchambre et de l'au moins un manchon (11), **caractérisé en ce qu'**une partie de compensation de dilatation thermique s'étendant circonférentiellement (13) est prévue, laquelle est agencée sur l'au moins un manchon (11) et comporte au moins une partie en forme de méandre (17) et qui est capable de compenser des contraintes résiduelles dans la liaison de l'au moins un manchon et du corps de préchambre (2) et des variations de dilatation thermique du corps de préchambre (2).

2. Composant de préchambre selon la revendication 1, dans lequel la cavité remplie de gaz (5) contient le gaz à une pression inférieure à la pression ambiante.

3. Composant de préchambre selon la revendication 1 ou 2, dans lequel le gaz est de l'air et/ou une atmosphère de protection d'un processus de soudage.

4. Composant de préchambre selon au moins l'une des revendications précédentes, dans lequel l'au moins une cavité remplie de gaz (5) n'est agencée que dans une région du corps de préchambre (2) qui s'étend depuis une deuxième extrémité (6) du composant de préchambre (1) le long de la direction longitudinale vers une première extrémité (7).

5. Composant de préchambre selon au moins l'une des revendications précédentes, dans lequel le composant de préchambre (1) comporte au moins un passage de transfert (8) agencé à une première extrémité (7) le long de la direction longitudinale du composant de préchambre (1), lequel au moins un passage de transfert (8) est adapté pour relier fluidiquement le volume de préchambre (4) à une chambre de combustion principale du moteur à combustion interne dans un état monté du composant de préchambre (1).

6. Composant de préchambre selon au moins l'une des revendications précédentes, dans lequel le composant de préchambre (1) comporte au moins un canal d'alimentation (9) agencé à une deuxième extrémité (6) le long de la direction longitudinale du composant de préchambre (1), lequel au moins un canal d'alimentation (9) est adapté pour relier fluidiquement le volume de préchambre (4) à une source de carburant et/ou d'air du moteur à combustion interne dans un état monté du composant de préchambre (1).

7. Composant de préchambre selon au moins l'une des revendications précédentes, dans lequel l'au moins un manchon (10) n'entoure qu'une région du corps de préchambre (2) qui renferme le volume de préchambre (4).

8. Composant de préchambre selon au moins l'une des revendications précédentes, dans lequel le contour extérieur du corps de préchambre (2) comporte au moins un évidement (12), de préférence s'étendant circonférentiellement, dans lequel l'au moins un évidement (12) est adapté pour recevoir l'au moins un manchon (11) et/ou lequel évidement (12) contribue au volume de la cavité remplie de gaz (5).

9. Composant de préchambre selon au moins l'une des revendications précédentes, dans lequel la région dans laquelle est agencée l'au moins une cavité remplie de gaz (5) couvre moins de 75 %, plus préférentiellement moins de 50 %, de la longueur totale du corps de préchambre (2) et/ou du volume de préchambre (4) mesurée le long de la direction longitudinale de la deuxième extrémité (6) à la première extrémité (7).

10. Composant de préchambre selon au moins l'une des revendications 1 à 8 et facultativement la revendication 9, dans lequel la région dans laquelle est agencée l'au moins une cavité remplie de gaz (5) couvre 35 %, de préférence 40 %, en particulier de préférence 50 %, de la longueur totale du corps de préchambre (2) mesurée le long de la direction longitudinale de la deuxième extrémité (6) à la première extrémité (7).

11. Composant de préchambre selon au moins l'une des revendications précédentes, dans lequel le composant de préchambre (1) comporte une pluralité de parties de composant, de préférence dans lequel la pluralité de parties de composant est reliée par un processus de soudage, de préférence en particulier un processus de soudage par faisceau d'électrons.

12. Procédé de fabrication d'un composant de préchambre (1) selon au moins l'une des revendications 1 à 11, comportant l'étape de formation d'un corps de préchambre (2) du composant de préchambre (1) s'étendant longitudinalement le long d'une ligne centrale (3), dans lequel le corps de préchambre (2) forme un volume de préchambre (4) en renfermant au moins partiellement celui-ci, **caractérisé en ce que** le procédé comporte en outre l'étape de formation d'au moins une couche du corps de préchambre (2) entourant au moins partiellement le corps de préchambre (2) circonférentiellement par rapport à la ligne centrale (3), dans lequel au moyen de l'au moins une couche entourant au moins partiellement le corps de préchambre (2), au moins une cavité remplie de gaz et étanche au gaz (5) est créée entre le corps de préchambre (2) et l'au moins une couche.

13. Procédé selon la revendication 12, dans lequel le procédé comporte en outre les étapes de fourniture de l'au moins une couche sous la forme d'au moins un manchon (11), dans lequel l'au moins un manchon (11) est placé autour du corps de préchambre (2), créant l'au moins une cavité remplie de gaz (5) entre l'au moins un manchon (11) et le corps de préchambre (2).

14. Procédé selon la revendication 12 ou 13, dans lequel le procédé comporte en outre l'étape de formation de l'au moins une couche pendant que le gaz est présent, de préférence sous une pression inférieure à la pression ambiante, de préférence par soudage de l'au moins un manchon (11), de préférence en particulier par soudage par faisceau d'électrons, avec le corps de préchambre (2) sous une atmosphère de protection.

15. Procédé selon au moins l'une des revendications 12 à 14, dans lequel le procédé comporte en outre l'étape de formation du corps de préchambre (2) au moins en partie, de préférence complètement, par un processus de fabrication additive.

16. Culasse pour un moteur à combustion interne et/ou moteur à combustion interne, de préférence moteur à combustion interne alimenté partiellement à l'hydrogène, comportant au moins un composant de préchambre (1) selon au moins l'une des revendications 1 à 11, de préférence dans lesquels la culasse (28) comporte un alésage destiné à recevoir le composant de préchambre (1), l'alésage étant configuré de sorte que de l'eau de refroidissement puisse circuler autour du composant de préchambre (1) entre l'alésage de culasse et le composant de préchambre (1).
